(19)

Europäisches
Patentamt

European
Patent Office

Office européen
des brevets

(11) **EP 3 330 812 B1**

(12) **EUROPEAN PATENT SPECIFICATION**

(45) Date of publication and mention
of the grant of the patent:
**27.10.2021 Bulletin 2021/43**

(51) Int Cl.:
*G05B 11/00* *(2006.01)*        *G05B 13/04* *(2006.01)*

(21) Application number: **16201898.0**

(22) Date of filing: **02.12.2016**

(54) **METHOD FOR CONTROLLING A TECHNICAL SYSTEM WITH A TWO DEGREE OF FREEDOM CONTROLLER AND ITS PARAMETERIZATION**

VERFAHREN ZUR STEUERUNG EINES TECHNISCHEN SYSTEMS MIT EINEM STEUERGERÄT MIT ZWEI FREIHEITSGRADEN SOWIE DESSEN PARAMETRISIERUNG

PROCÉDÉ DE COMMANDE D'UN SYSTÈME TECHNIQUE AYANT UN ORGANE DE COMANDE À DEUX DEGRÉS DE LIBERTÉ ET SON PARAMÉTRAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**06.06.2018 Bulletin 2018/23**

(73) Proprietor: **AVL List GmbH**
**8020 Graz (AT)**

(72) Inventor: **Gregorcic, Gregor**
**8047 Graz (AT)**

(74) Representative: **Patentanwälte Pinter & Weiss OG**
**Prinz-Eugen-Straße 70**
**1040 Wien (AT)**

(56) References cited:
**CN-B- 1 877 105     US-A1- 2006 241 786**

• **BINGZHAO GAO ET AL: "Position Control of Electric Clutch Actuator Using a Triple-Step Nonlinear Method", IEEE TRANSACTIONS ON INDUSTRIAL ELECTRONICS., vol. 61, no. 12, 1 December 2014 (2014-12-01), pages 6995-7003, XP055375697, USA ISSN: 0278-0046, DOI: 10.1109/TIE.2014.2317131**
• **Prodromos Daoutidis ET AL: "Synthesis of Feedforward|State Feedback Controllers for Nonlinear Processes", AIChE Journal, 1 October 1989 (1989-10-01), pages 1602-1616, XP055376265, Retrieved from the Internet: URL:https://deepblue.lib.umich.edu/bitstre am/handle/2027.42/37404/690351004_ftp.pdf; sequence=1 [retrieved on 2017-05-26]**

EP 3 330 812 B1

## Description

The invention pertains to a method for controlling a technical system as plant with a Two Degree of Freedom controller having a feedforward controller providing an output and a feedback controller providing an output whereas the plant is modelled with a model with a chosen model structure having system parameters and the feedforward controller uses an inverse of the model of the plant and the Two Degree of Freedom controller is designed to calculate a control variable of the plant from the output of the feedforward controller and the output of the feedback controller to achieve a setpoint value of an output variable of the plant in dependence from a state variable of the plant.

There are many applications where a plant has to be controlled using a controller. A plant (also often called controlled system), as expression of control theory, represents the technical system to be controlled. An example of a technical system is an engine testbed on which the engine torque of the internal combustion engine (unit under test on the testbed) has to be controlled in accordance to set reference values (e.g. a demanded torque). The controller has to be designed and/or parameterized to adapt the controller to the static and dynamic behaviour of the actual plant. Only a correctly tuned controller is able to adequately and sufficiently control the plant, e.g. with respect to control error, stability, controllability, etc. Many plants, however, show a (highly) nonlinear dynamic behaviour in practice, which makes the controller design and/or parameterization difficult. Therefore, often a given controller design with a set of controller parameters is used for a given plant or control task which is then only parameterized (assigning values to the controller parameters) by tuning the controller parameters in order to achieve a desired, given control behaviour. Although the controller design can be simple, tuning of the controller parameters has proven to be difficult because of the nonlinear behaviour of the plant. Therefore often highly trained and experienced experts are required to successfully parameterize such a controller. For the engine testbed example, but also for other testbed applications as e.g. for a transmission testbed, drive train testbed, vehicle testbed, roller testbed, etc., an Enhanced Progressive Adaptive Controller (ENPAC) is often used. However, as mentioned before, tuning of an ENPAC is a rather difficult and time consuming task.

There are of course also other controller designs known. Especially a known Two Degree of Freedom (2DoF) controller is well suited for many applications, as such controller show good reference tracking performance and disturbance rejection. The problem with such a controller is that the controller uses an inversion of the plant in the feedforward part of the controller. For a linear plant, an inversion is usually easy to determine. But this does not apply to a nonlinear plant. Therefore a 2DoF controller cannot easily be used for controlling a nonlinear plant.

Bingzhao Gao, et al., "Position Control of Electric Clutch Actuator Using a Triple-Step Nonlinear Method", IEEE Transactions on Industrial Electronics, Vol.61, No. 12, Dec. 2014 describes a 2DoF controller with a feedforward controller that is designed with a steady-state control and a reference-dynamics feedforward control whose outputs are summed to form the control variable of the feedforward controller. The feedback controller is designed as state dependent PID controller.

It is therefore an object of the present invention to provide a method for controlling a technical system as nonlinear plant with a Two Degree of Freedom controller and for designing and parameterizing such a Two Degree of Freedom (2DoF) controller for a nonlinear plant.

This object is achieved in that the inverse of the plant is constituted by a nonlinear dynamic part and a nonlinear static part, a static map of the plant is provided that maps the control variable and the state variable onto the output variable and the nonlinear static part is formed by an inverse of this static map, whereas the inverse outputs the control variable for a given state variable and output variable, the plant is modelled with a model with a chosen model structure having system parameters and that the nonlinear dynamic part is formed as function of the system parameters of the model and of a desired output variable of a desired closed loop behaviour of the plant and the output of the nonlinear dynamic part and the state variable are fed into the inverse of the static map of the nonlinear static part that outputs the control variable for controlling the plant. With the nonlinear static and nonlinear dynamic part it is possible to approximate the inverse of the nonlinear plant model, which can then be used in the feedforward controller. The nonlinear dynamic part approximates the dynamic behaviour of the plant and the nonlinear static part the static behaviour. By modelling the nonlinear static part as static map it is possible to determine its inverse which is fed by the output of the nonlinear dynamic part.

This controller can be parameterized by carrying out a first defined testrun on the testbed with the unit under test and by collecting first testrun data during the first testrun which is used to identify the static map of the plant that maps the control variable and the state variable onto the output variable and this static map is inverted to form the nonlinear static part of the feedforward controller, and by carrying out a second defined testrun on the testbed with the unit under test and by collecting second testrun data during the second testrun which is used for identification of the system parameters of the model of the plant for the nonlinear dynamic part. This allows for an easy parameterization of the Two Degree of Freedom controller, or its feedforward controller, with an easy to follow routine that could also be performed fully automatically on the test bed. The feedback controller can be regarded as being parameterized, as its parameters are easy to parameterize or to tune, especially as there are no high demands on the feedback controller.

The present invention is explained in greater detail below with reference to Figures 1 to 16, which show by way of example, schematically and without limitation, advantageous embodiments of the invention. In the drawings:

Fig.1 the known structure of a 2DoF controller,
Fig.2 an example of a technical system in form of an engine testbed as controlled plant,
Fig.3 a first order model structure as model of the plant,
Fig.4 a desired closed loop behaviour of the plant,
Fig.5 a static map of the plant,
Fig.6 the monotonization of the static map,
Fig.7 the inverse of the static map,
Fig.8 an example of the structure of the feedforward controller,
Fig.9 the implementation of a time delay in the 2DoF controller,
Fig.10 a testrun for identification of the static map,
Fig.11 a measured static map during the testrun,
Fig.12 a dynamic testrun for identification of the system parameters,
Fig.13 the measured response during the dynamic testrun,
Fig.14 identified maps of the system parameters,
Fig.15 a standardized emission test cycle and
Fig.16 the measured response during the standardized emission test cycle.

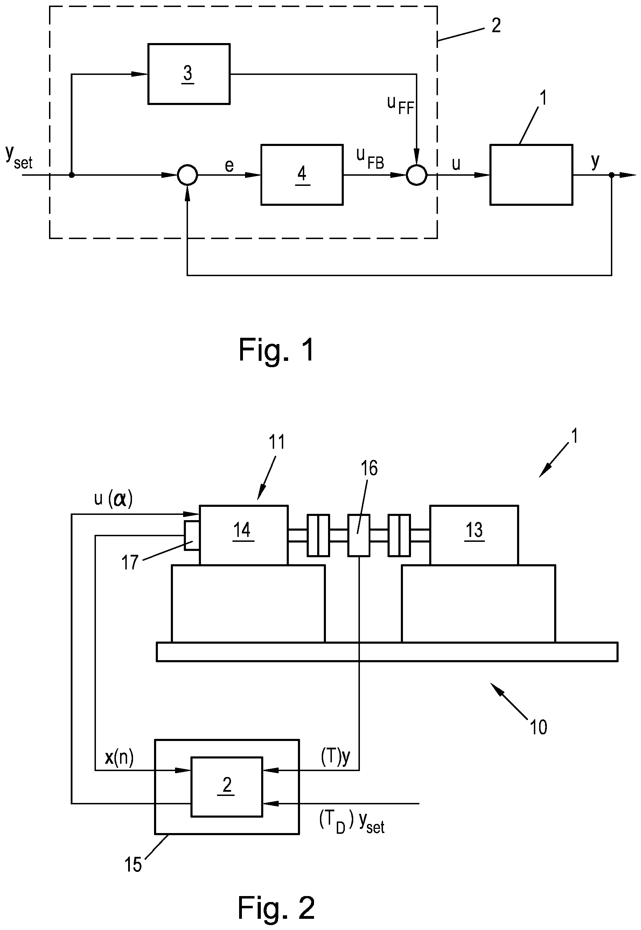

In Fig.1 the general and well known controller structure of a Two Degree of Freedom (2DoF) controller 2 for controlling a plant 1 is shown. The Two Degree of Freedom controller 2 comprises a feedforward controller 3 and a feedback controller 4. As it is often impossible to achieve good setpoint tracking and fast disturbance rejection at the same time with an ordinary feedback controller with one degree of freedom, a Two Degree of Freedom (2DoF) controller 2 with two degrees of freedom can be used as is shown in Fig.1.

The plant 1 is a dynamic technical system that needs to be controlled. The technical system is for example a testbed 10 with a unit under test 11 arranged and operated on the testbed 10 as shown in Fig.2. There can also a load machine 13 be arranged on the testbed 10 which is connected to the unit under test 11 for applying a load (e.g. a load torque) to the unit under test 11. The load machine 13 can also be part of the plant 1. The testbed 10 can be an engine testbed with an internal combustion engine 14 as unit under test 11 that is connected to a dynamometer (e.g. an electric motor or a water brake dynamometer) as load machine 13. The plant 1 is controlled with a control variable u calculated by the controller 2 which is implemented (software and/or hardware) in a plant control unit 15. The control variable u is e.g. used to adjust at least one actuator of the plant 1. The control variable u of an engine 14 can be the percentage $\alpha$ of the applied throttle pedal, for example. The controller 2 controls an output variable y of the plant 1 according to

a given setpoint $y_{set}$. For an engine 14 the setpoint $y_{set}$ can be a demanded torque $T_D$, for example. The plant 1, or in general the technical system, responses with the output variable y if the input variable u is applied to the plant 1. The output variable y of an engine 14 is for example the actual engine torque T. The current value of the output variable y can be measured by a suitable sensor 16, e.g. a torque sensor, can be calculated by using a simulation model, e.g. of the unit under test 11, of a vehicle into which the unit under test 11 is arranged, etc., or can be estimated with an observer from other known (e.g. by measured) variables of the plant 1. The output variable y is fed back in known manner to the controller 2 for feedback control.

For the Two Degree of Freedom controller 2 as shown in Fig.1, the output variable y is fed back to the input of the feedback controller 4, to form the control error e as input to the feedback controller 4. The 2DoF controller 2 utilizes usually also certain state variables x of the plant 1, e.g. an engine speed n in case of an engine 14. The state variable x can be measured by using a sensor 17, can be calculated by using a simulation model, e.g. of the unit under test 11, of a vehicle into which the unit under test 11 is arranged, etc., or can be estimated with an observer for the state variable x from other known (e.g. measured) variables of the plant 1.

The control variable u for the plant 1 calculated in the 2DoF controller 2 comprises a control variable $u_{FF}$ of the feedforward controller 3 and a control variable $u_{FB}$ of the feedback controller 4, which are summed to form the control variable u for the plant 1. The setpoint $y_{set}$ is fed to the feedforward controller 3 and to the feedback controller 4. The controller design is usually done with a (mathematical) model of the plant 1 that comprises also certain state variables x. The model of the plant 1 maps the input (control variable u) to the output y. There can of course also be more than one output variable y and/or state variable x and are consequently to be understood generally as vectors with dimension ≥1.

In well-known manner, the feedforward controller 3 embodies an inverse of the controlled plant 1, i.e. an inverse of the model of the plant 1. Unfortunately, the model of a dynamic technical system as the plant 1 is usually nonlinear. As it is difficult to determine the inverse of a nonlinear plant model, the most challenging task of the design of the inventive 2DoF controller 2 is the implementation of the feedforward controller 3. The necessary inversion of the plant 1 according to the invention is described in the following, without limitation, on the example of a plant model having a known first order model structure.

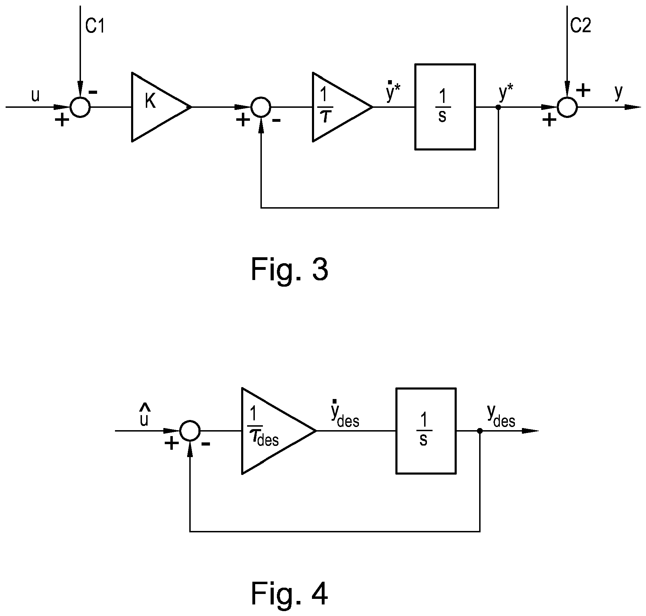

A first order plant is in general defined as $\tau \cdot \dot{y} + y = K \cdot u$ with the input u, the output y and the time derivative of the output $\dot{y}$, which leads to the model structure as shown in Fig.3. K is the gain and $\tau$ the time constant, which are both given system parameters defined by the implementation of the plant 1 and can be regarded as being known. The known model structure of the first order plant is shown in Fig.3, where s represents the known Laplace operator. In the shown structure C1 and C2 represent input and output offsets, respectively. From the structure in Fig.3 the equation

$$\dot{y}^* = -\frac{1}{\tau}(y - C2) + \frac{K}{\tau}(u - C1)$$

can be derived. As the plant 1 is a dynamic technical system, the parameters K and $\tau$, and also C1, C2 if present, are dependent from a current operating point (output variable y and state variable x at a certain point in time) of the dynamic system and the equation is nonlinear and therefore not directly invertible.

For designing the feedforward controller 3 of the Two Degree of Freedom controller 2 despite the nonlinear plant model a desired closed loop behaviour of the plant 1 is chosen as shown in Fig.4. The chosen desired behaviour is defined by the desired time constant $\tau_{des}$ which produces a desired output variable $y_{des}$. It should be noted that the structure of the desired plant (Fig.4) is preferably the same as the structure of the plant model (Fig.3). I.e., if the response of the plant 1 can be characterized as a first order response, then the desired behaviour is preferably also a first order model, if the plant response is of second order then the desired behaviour is preferably of second order, and so on. Now, by comparison, it is possible to substitute $\dot{y}^*$ and y in above equation of the plant model with $\dot{y}_{des}$ and $y_{des}$ of the desired plant

$$\hat{u} = \frac{\tau}{K}\dot{y}_{des} + \frac{1}{K}y_{des} + C1 - \frac{1}{K}C2$$

which leads to , which represents an approximation of the inverse of the plant 1. In this equation û is the input variable that would be required to achieve the desired output variable $y_{des}$. In other words, if the new input variable û is applied to the plant 1, the plant 1 would response with the desired output variable $y_{des}$. From that it is apparent that this equation represents an approximation of the inverse of the plant model with a design parameter $\tau_{des}$ or $Y_{des}$ and with the system parameters K, $\tau$ of the plant 1.

This can be used to design the feedforward controller 3. The above equation comprises a nonlinear dynamic part $\dfrac{\tau}{K}\dot{y}_{des} + \dfrac{1}{K}y_{des}$ and a nonlinear static part $C1 - \dfrac{1}{K}C2$ . In general the nonlinear dynamic part is a function of system parameters of the model of the plant 1 and of a desired output variable $y_{des}$.

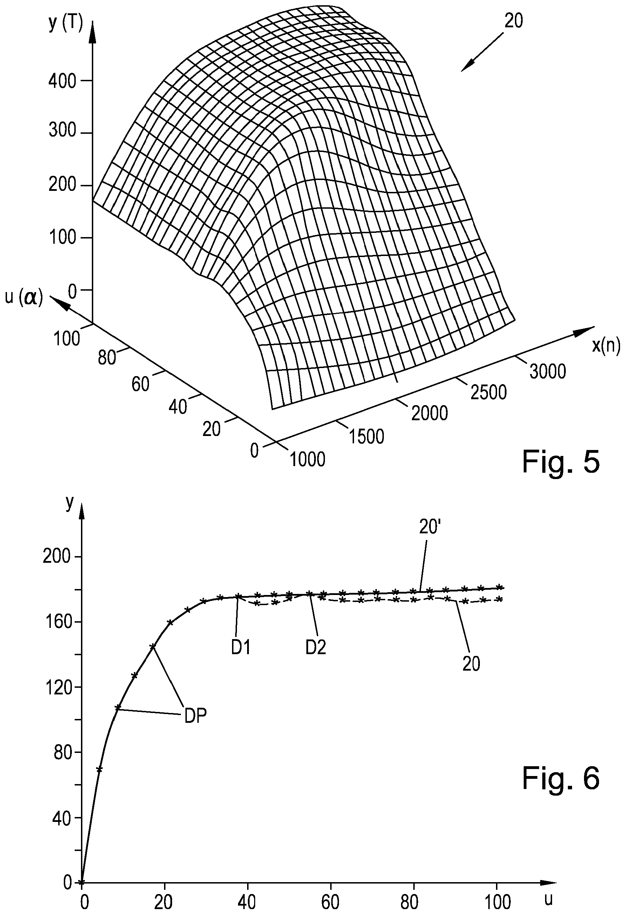

As nonlinear static part a map 20 of the output variable y in dependence of the control variable u and state variable x is used in accordance with the invention, that is y(k) = f(x(k), u(k)) where k represents the actual time step of the control and f a function that maps the control variably u and state variable x to the output variable y. Such a map 20 is exemplarily shown in Fig.5 for the example of an engine map for an engine 14, with the engine torque T as output variable y, the percentage $\alpha$ of the applied throttle pedal as control variable u and the engine speed n as state variable x. The inverse of the nonlinear static part can then be written as û(k) = f$^{-1}$(x(k), y(k)). For an exact inversion û(k) = u(k) would hold.

If the function f is monotonically increasing over the entire range of the control variable u for a given state variable x, then it is easily possible to determine its inverse, i.e. the function f$^{-1}$, with known methods. For example the inverse could be found with help of the Matlab (Matlab is a known software of the company The Math-Works) function interp1(), that realises a 1-D data interpolation. This leads to the inverted map 21 of the map 20.

If the function f is not monotonically increasing over the entire range of the control variable u, however, then a monotonization step is carried out first. The monotonization can be done as described in the following with reference to Fig.6.

A map 20 is usually stored as multidimensional (according to the dimension of the map 20) table with multiple datapoints DP where every datapoint DP has the dimension of the map 20. Then the state variable x is held constant and the function of the output variable y in dependence from the control variable u is analysed. If the output variable y is not monotonically increasing over the entire range of the control variable u, the last datapoint D1 where the function is still monotonically increasing is searched. From this datapoint D1 and the datapoint D2 of the maximum value of the output variable y the slope of a line connecting the datapoints D1 and D2 is calculated. This slope is then added to all the datapoints DP in the region where the output variable y is not monotonically increasing. In Fig.6 the dotted line shows the original non-monotonically increasing output variable function f and the solid line shows the resulting monotonized output variable function f. This is repeated for different values of the state variable x in order to obtain the monotonized map 20'. Finally also a known smoothing of the monotonized map 20' can be applied to all the manipulated datapoints DP. In this way a monotonically increasing output variable function f can be guaranteed and the shape of the original function f can basically be preserved. For the inversion step it is important that the map 20 is at least monotonically increasing along the axis of the control variable u (i.e. for a given, fixed state variable x).

The monotonization of the map 20 introduces of course an additional control error. This error is seen as model mismatch which is compensated for by the feedback controller 4.

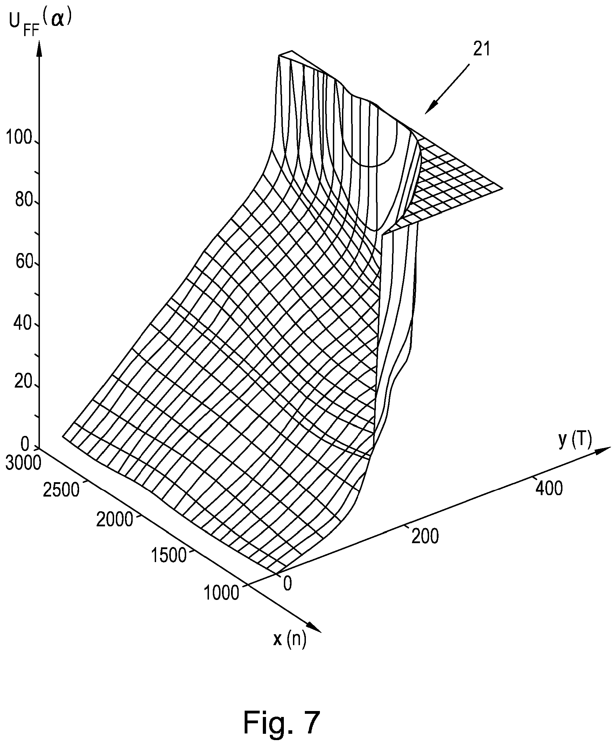

The resulting monotonized map 20' can then be inverted with known means as described above. The final inverted map 21 of the monotonized map 20' of the map 20 in Fig.5 is shown exemplarily in Fig.7. The inverted map 21 outputs the control variable u (e.g. pedal position $\alpha$) for a given operating point, given by a state variable x (e.g. speed n) and a given output variable y (e.g. torque T). The above nonlinear static part $C1 - \dfrac{1}{K}C2$ is embedded in the map 20 and consequently also in the inverted map 21.

The nonlinear dynamic part $\dfrac{\tau}{K}\dot{y}_{des} + \dfrac{1}{K}y_{des}$ comprises the system parameters $\tau$ and $K$ of the plant 1 as functions of the operating point of the system given by the output variable y and state variable x. For the example of an engine 14 the operating point could be given by the engine torque T and engine speed n. To determine the system parameters $\tau$, K the dynamic system is first identified and modelled with a local model network (LMN) that models the nonlinear dynamic behaviour of the system, i.e. the plant 1. LMNs are well-known in the art and calculate an estimation $\hat{y}$ of the output variable y as a weighted combination of a number i=1,...,m outputs $\hat{y}_i$ of local models $M_i$ that are combined to form a global model. The weighing is done with a validity function $\rho_i$, which is a function of a scheduling vector $\Phi$ that defines the operating point of the system. The scheduling vector is usually a subvector of a data vector $\psi = (u, x, y)^T$. The validity functions $\rho_i$ define the activation level of local models $M_i$ at a particular operating point (given as scheduling vector $\Phi$). This means that not every local model $M_i$ contributes in every operating point in the same amount to the estimation of the output variable $\hat{y}$. The output $\hat{y}$ of the LMN can generally be written as

$$\hat{y}(k+1) = \sum_{i=1}^{m} \rho_i \big(\phi(k)\big) \cdot M_i \big(\Psi(k)\big).$$

For the local models $M_i$ a suitable model structure is chosen, usually a linear function of the data vector $\psi$ and with local model parameters in form of a parameter vector $\Theta$, although it is also possible to choose a nonlinear function as local Model $M_i$. For a linear local model $M_i$ the local output $\hat{y}_i$ can generally be written as $\hat{y}_i = \Psi \cdot \Theta_i$ and the LMN as

$$\hat{y}(k+1) = \sum_{i=1}^{m} \rho_i \big(\phi(k)\big) \cdot \hat{y}_i \big(\Psi(k), \Theta(k)\big).$$

A local model $M_i$ can for example be defined as polynomial according to $\hat{y}_i(k) = a_{il}y_i(k{-}1)+...+a_{in}y_i(k{-}n)+...+b_{il}u(k)+...+b_{im}u(k{-}m)+d_i$ with n past output y and present and m past input u samples. With such a model $M_i$ the data vector $\psi$ follows as $\Psi = (y(k{-}1) ... y(k{-}n)\ u(k) ... u(k{-}m)\ 1)^T$ and the parameter vector $\Theta$ as $\Theta = (a_{il} ... a_{in}\ b_{il} ... b_{im}\ d_i)^T$.
In case of a first order model structure, the local model $M_i$ could be given by $\hat{y}_i(k) = a_{il}y_i(k-1) + b_{il}u(k)$.
If all local models $M_i$ share the same model structure (which is usually and also in this application the case), the estimation $\hat{y}$ of the output variable y could also be calculated from the LMN by blending the parameters $\Theta$ instead of blending the local outputs $\hat{y}_i$. In this case the LMN can be written as

$$\hat{y}(k+1) = \Psi(k)^T \sum_{i=1}^{m} \rho_i \big(\phi(k)\big) \cdot \Theta_i(k)$$

and the parameters of the global model are a linear combination of the parameters $\Theta_i$ of the local models $M_i$ and of weights depending from the operating point (given by the validity functions $\rho_i$). This means that it is possible to determine parameter maps of the parameters of the global model over all possible operating points. For a first order local model structure the parameter maps would map the operating point dependent system parameters K and $\tau$, calculated from the identified $\Theta_i$ ($a_{in}$, $b_{im}$).

For this calculation the identified parameters $a_{in}$, $b_{im}$ in the discrete time domain could be transformed into the continuous time domain, for example with the help of the well-known bilinear transformation. This leads to parameters a, b for a given operating point in continuous time domain. The parameters K and $\tau$ could then be calculated as $K = \dfrac{b}{a}$ and $\tau = \dfrac{1}{a}$, for example. Alternatively, and much easier, the system parameters K and $\tau$ could also directly be identified using the chosen model structure, as e.g. shown in Fig.3. At different operating points a step could be applied as input u to the plant 1 and the output y could be recorded. Then the same input is applied to the chosen model structure and the parameters of the model, here e.g. parameters K and $\tau$, are varied to produce the same output or to optimize, preferably minimize, (according to a given criteria) the cost function (e.g. mean square error) of the difference between the model output and the measured output. By that it is possible to determine the system parameters K and $\tau$ for different operating points.
The use of LMNs to model nonlinear systems is well known, e.g. from Gregoric, G., et al., "Nonlinear system identification: From multiple-model networks to Gaussian processes", Engineering Applications of Artificial Intelligence 21 (2008), p.1035-1055. The identification of a LMN for a given technical system for modelling the technical system is also well documented in the prior art, e.g. in Hametner, C., et al., "Local model network identification for online engine modelling", 2013, Information Sciences 220 (0), S.210-225. Basically LMNs are identified from given data from the technical system, e.g. measured data from the technical system. LMNs and its identification are therefore not explained in more detail here.
By identifying the plant 1 with a LMN using blended model parameters maps of the system parameters K, $\tau$ in dependence from an operating point can be obtained. These system parameter maps for the parameters K, τ can then directly be used in the nonlinear dynamic part $\frac{\tau}{K}\dot{y}_{des} + \frac{1}{K}y_{des}$ of the feedforward controller 4.

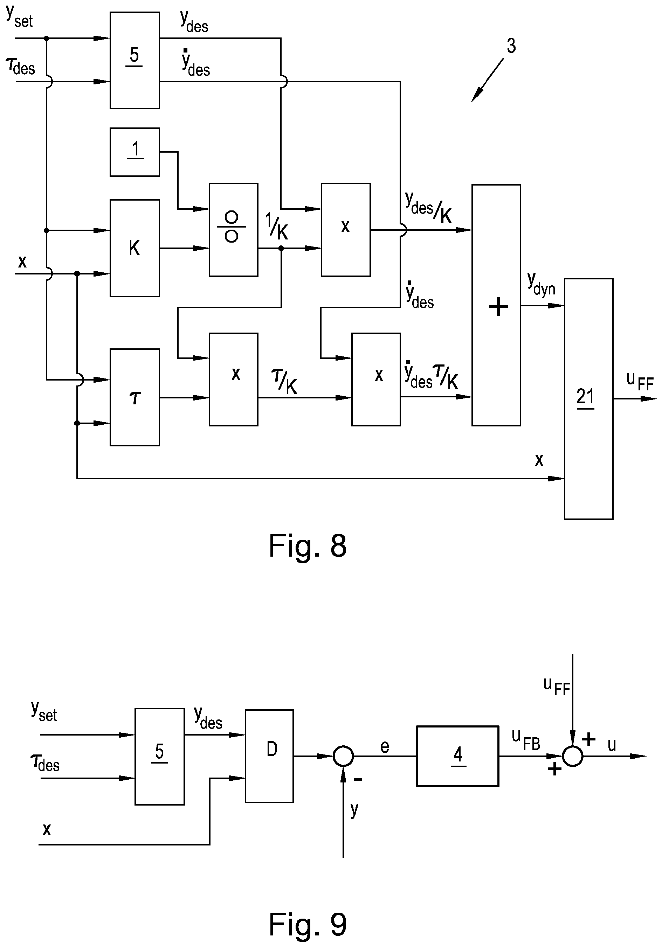

It would also be possible to use another global model instead of the LMN as long as the global model utilizes model structures according to the model structure of the plant 1. This allows identification of the system parameters of the plant 1 with the global model which can then be used to approximate the inverse of the plant model as described above The nonlinear static part and the nonlinear dynamic part need to be combined in order to form the output $u_{FF}$ of the feedforward controller 3. This is done as described with reference to Fig.8 and for the above example of a first order model structure.

The control parameter of the feedforward controller 4 is the chosen desired behaviour of the plant 1. In the above example of a first order model structure, the design parameter would be the desired time constant $\tau_{des}$ (see Fig.4). By setting the desired time constant $\tau_{des}$ the behaviour of the controlled dynamic system can be affected. In the trajectory block 5 the desired output $y_{des}$ and its time derivative $\dot{y}_{des}$ are calculated in accordance to the chosen desired closed loop behaviour (in the example as shown in Fig.4). With the (offline and beforehand) identified system parameter maps the system parameters τ, K are determined for the current operating point (given by the state variable x and setpoint $y_{set}$) which are used to calculate the nonlinear dynamic part

$$\frac{\tau}{K}\dot{y}_{des} + \frac{1}{K}y_{des}$$

which represents a dynamic output $y_{dyn}$. The dynamic output $y_{dyn}$ and the state variable x are input into the inverted static map 21 which in turn outputs the control variable $u_{FF}$ of the feedforward controller 3. This means that a shaped dynamic output variable $y_{dyn}$ is input into the inverted static map 21 to achieve the desired behaviour of the plant 1.

From the above it is apparent that also other model structures could be used instead of a first order model structure. Another simple model structure could be an also known second order model structure or a polynomial model structure.

External disturbances and an unavoidable model mismatch (e.g. caused by the inversion of the map or the identification of the parameter maps) are compensated for by the feedback controller 4 of the 2DoF controller 2.

It would also be possible to extend the model structure with a system time delay D which is given by the time that is required for the output y of the system (plant 1) to respond if the input u is changed. Consideration of the time delay D is advantageous to ensure that the feedback controller 4 is in synchronization with the feedback controller 3 and the system response. When the output $u_{FF}$ of the feedforward controller 3 calculated from a new setpoint $y_{set}$ is applied to the plant 1, the plant 1 responds to this input only after the time delay D. But the feedback controller 4 would immediately react on the new setpoint $y_{set}$. Therefore, the time delay D is used to delay the setpoint $y_{set}$ before it is fed into the feedback controller 4-The time delay D could also be identified in course of the identification of the LMN and could also be given by a map in dependence from the operating point (output y and state variable x). To this end the time delay D could also be measured during the identification of the LMN. The time delay D could then be used in the 2DoF controller 2 4 to delay the desired output $y_{des}$ that is used in the feedback controller 4. To this end the output of the trajectory block 5 of the feedforward controller 3 can be used, as exemplarily shown in Fig.9. In an alternative implementation the output setpoint $y_{set}$ and the state variable x could directly be used as input of the map for the time delay D.

The parameterisation of the Two Degree of Freedom controller 2 can be fully automatized for a given plant 1 as is described in the following. For the parameterisation the model structures of the plant model and of the local models $M_i$ of the LMN are defined, e.g. a first order model structure as described above. The method for parameterisation comprises the identification of the nonlinear static part as map 20 (and its inverse) and of the system parameters of the plant 1 which are required for the nonlinear dynamic part. The order of these identification procedures is not important.

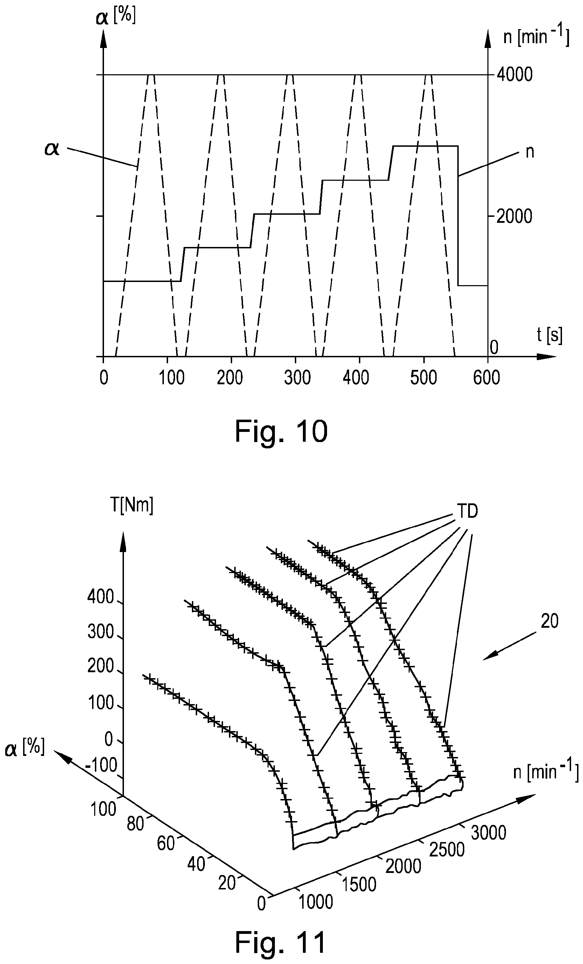

For identification of the nonlinear static part a predefined testrun is carried out with the unit under test 11 on the testbed 10. The automatic identification implies of course that the testbed 10 is fully automatized so that the testrun can be performed without the need of an operator. If this is not the case the support of an operator would be required which would lead to semi-automatic identification. A possible exemplary testrun for identifying an engine map as static map 20 of an engine 14 is exemplarily shown in Fig.10. The testrun is advantageously designed to identify the static behaviour of the plant 1, e.g. preferably without transient changes. The testrun comprises a number of speed n (state variable x) steps accompanied with a slow variation of the pedal position α (control variable u) for every speed n step. There are of course also known methods, so called design of experiments DoE, to define a testrun with generates data with optimum information content for identification of a system. The defined testrun is carried out on the testbed 10 with the unit under test 11 and the output y (torque T) is measured. For an engine 14 the pedal position α (input variable u) and the engine speed n (state variable x) are varied and the torque T is measured as output y. Part of the generated measured data (training data TD) is used for the identification of the map 20. The rest of the data (or part of the rest of the data can be used for verification). The training data TD is shown in Fig.11 with the plus-sign for the example of an engine 14. A Gaussian process approach (e.g. as described in Gregorcic, G., et al.,

"Gaussian process approach for modelling of nonlinear systems", Engineering Applications of Artificial Intelligence 22 (2009), p.522-533) can be utilised to obtain the static map 20 from the training data TD. The static map 20 can then be inverted as described above to obtain the inverted map 21.

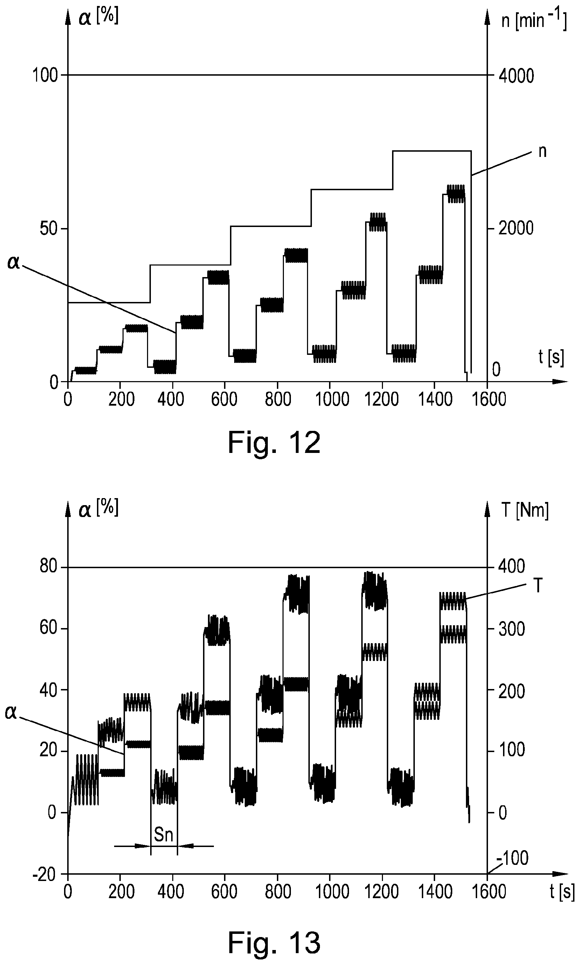

For identification of the LMN the number and distribution (validity function $\rho_i$) of the local models $M_i$ has to be defined first. For example fifteen local models $M_i$ (three in each speed n step of the above map 20 identification) could be placed in the regions of the measured data in Fig.11 where the engine torque T does not saturate. To identify the LMN another testrun is used, this time a testrun that advantageously allows identification of the local dynamic behaviour of the plant 1. Again DoE methods could be used to define the testrun. A possible testrun is shown in Fig.12 and comprises speed n steps and this time transient changes of pedal position $\alpha$ for every speed n step. The testrun should of course be designed to stimulate the plant 1 in the region of the operating points the local models $M_i$ are placed. This dynamic testrun is again automatically, or semi-automatically, run on the testbed 10 with the unit under test 11. The measured response (output y for the varying input u and a given state x) for the testrun of Fig.12 is shown in Fig.13. The collected data of the testrun (measured torque T) is then split in training data and validation data and the training data is used for identification of the LMN, e.g. as described in Hametner, C., et al., "Local model network identification for online engine modelling", 2013, Information Sciences 220 (0), S.210-225.

When the testrun is designed with sequences that especially stimulate single local models $M_i$ (as in Fig.12), the collected data could also be divided in single sequences. Every sequence can then be used to identify the local model $M_i$ assigned to this sequence. The sequence Sn in Fig.13 is for example used to identify the n-th local model $M_n$, and so on.

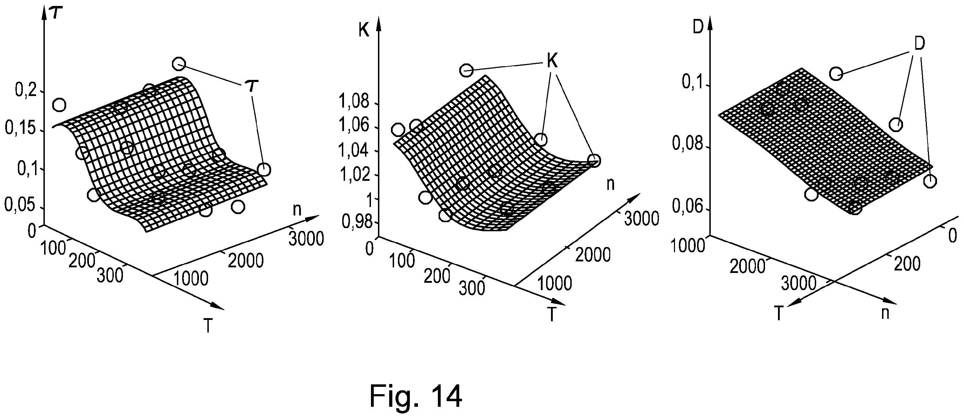

The identification leads to the parameters $\Theta_i$ of the local models $M_i$ that are blended as describes above. From the parameters $\Theta_i$ the parameter maps for the system parameters, here e.g. $\tau$, K and D (if used), are generated. In Fig.14 the three parameter maps for parameters gain K, time constant $\tau$ and time delay D are shown. The identified parameters for the different operating points (defined by the testrun) are shown as dots. Again a Gaussian process modelling approach can be used to generate the shown parameter maps from the single dots.

With the parameter maps (Fig.14) and the static map 20, or its inverse, the feedforward controller 3 of the 2DoF controller 2 is fully parameterized.

The feedback controller 4 compensates for the model mismatch and provides disturbance rejection. Since the closed loop is linearised by application of the feedforward controller 3, the feedback controller 4 can be simple (e.g. a simple PI- or PID-controller or any other known conventional controller) and does not need to be fine tuned. The parameters of the feedback controller 4 can either be preset to reasonable values, which is in most cases sufficient. The parameters of the feedback controller 4 can also be tuned, for example using a simple known Ziegler-Nichols tuning method. The Ziegler-Nichols method is a well-known heuristic method of tuning a PID or PI controller. It is basically performed by increasing the parameters of the chosen controller until a satisfactory behaviour is reached. It is of course also possible to apply other known methods for designing the feedback controller 4 and/or for tuning the parameters of the feedback controller 4 or to apply different and also more complex control strategies with the feedback controller 4.

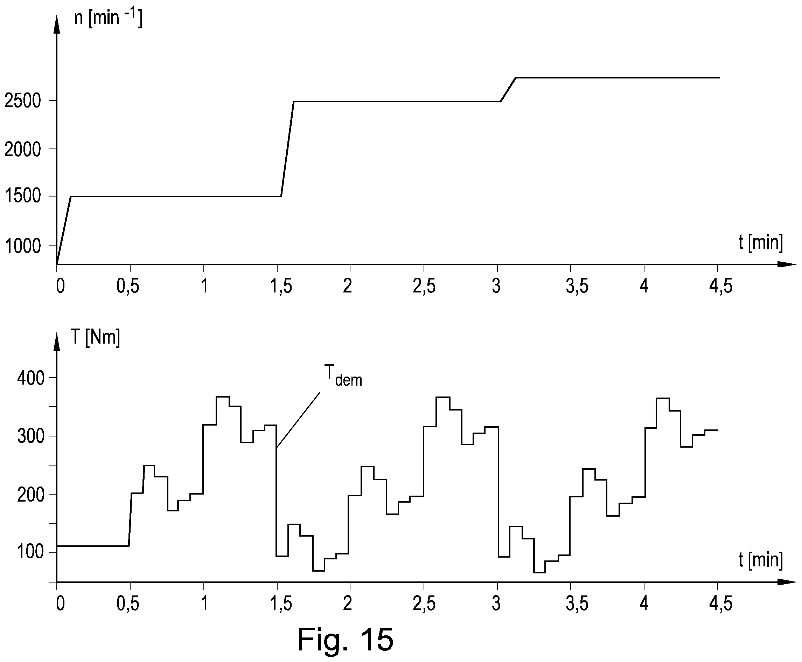

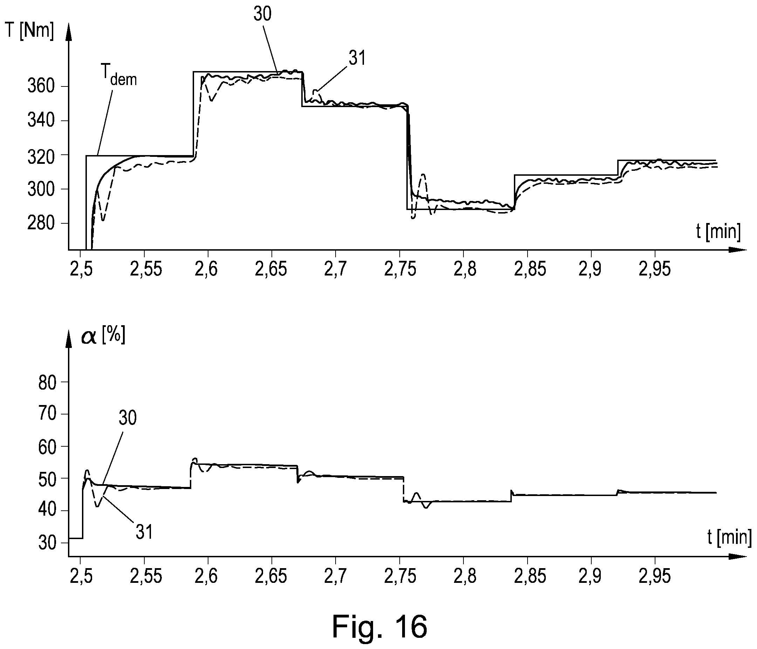

To verify the design of the 2DoF controller 2 the engine 14 on the testbed 10 passed a standardized emission test cycle testrun as shown in Fig.15. The 2DoF controller 2 is used to control the engine 14 on the testbed 10 according to the emission test cycle. This means that the defined testcycle provides the setpoints $y_{set}$ (torque $T_{dem}$) and the 2DoF controller 2 calculates the pedal position $\alpha$ as control variable u. The results are shown in Fig.16 for a zoomed-in portion of the emission test cycle testrun in which the performance of the inventive controller 2 (curve 30) is compared with the performance of an ENPAC controller (Curve 31) mentioned in the introductory part of the specification. From Fig.16 it is apparent that the inventive controller 2 is able to track the demanded torque $T_{dem}$ better than the ENPAC controller.

**Claims**

1. Method for controlling a technical system as plant (1) with a Two Degree of Freedom controller (2) having a feedforward controller (3) providing an output ($u_{FF}$) and a feedback controller (4) providing an output ($u_{FB}$) whereas the plant (1) is modelled with a model with a chosen model structure having system parameters (K, $\tau$) and the feedforward controller (3) uses an inverse of the model of the plant (1) and the Two Degree of Freedom controller (2) is designed to calculate a control variable (u) of the plant (1) from the output ($u_{FF}$) of the feedforward controller (3) and the output ($u_{FB}$) of the feedback controller (4) to achieve a setpoint value ($y_{set}$) of an output variable (y) of the plant (1) in dependence from a state variable (x) of the plant (1), **characterized in that** the inverse of the model of the plant (1) is constituted by a nonlinear dynamic part and a nonlinear static part, **that** a static map (20) of the plant (1) is provided that maps the control variable (u) and the state variable (x) onto the output variable (y) and the nonlinear static part is formed as inverted map (21) of this static map (20), whereas the inverted map (21) outputs the control variable (u) for a given state variable (x) and output variable (y), **that** a desired closed loop behaviour of the plant (1) with a desired output variable ($y_{des}$) is chosen and the nonlinear dynamic part is formed as function of the system parameters ($K$, $\tau$) of the model and of the desired output variable ($y_{des}$) of the desired closed loop behaviour of the plant (1) **and that** the dynamic output ($y_{dyn}$) of the nonlinear dynamic part and the state variable ($x$) are fed into the inverted map (21) of the nonlinear static part that outputs the output ($u_{FF}$) of the feedforward controller (3).

2. Method according to claim 1, **characterized in that** the plant (1) is modelled as first order plant with a gain ($K$) and a time constant ($\tau$) as system parameters.

3. Method according to claim 1, **characterized in that** the setpoint value ($y_{set}$) of the output variable ($y$) or the desired output variable ($y_{des}$) is delayed by a system time delay ($D$) before it is fed into the feedback controller (4).

4. Method according to claim 1, **characterized in that** a monotonization step for monotonizing the static map (20) of the plant (1) is carried out before inverting the static map (20) if the static map (20) is not monotonically increasing.

**Patentansprüche**

1. Verfahren zum Steuern eines technischen Systems als Regelstrecke (1) mit einem Zwei-Freiheitsgrade-Regler (2), der eine Vorsteuerung (3), die einen Ausgang ($u_{FF}$) bereitstellt, und einen Rückführregler (4) aufweist, der einen Ausgang ($u_{FB}$) bereitstellt, wobei die Regelstrecke (1) mit einem Modell mit einer gewählten Modellstruktur modelliert ist, die Systemparameter ($K$, $\tau$) aufweist, und die Vorsteuerung (3) eine Inverse des Modells der Regelstrecke (1) verwendet und der Zwei-Freiheitsgrade-Regler (2) gestaltet ist, um eine Stellgröße ($u$) der Regelstrecke (1) aus dem Ausgang ($u_{FF}$) der Aufschalteinheit (3) und dem Ausgang ($u_{FB}$) des Rückführreglers (4) zu berechnen, um einen Sollwert ($y_{soll}$) einer Ausgangsgröße ($y$) der Regelstrecke (1) in Abhängigkeit von einer Zustandsgröße ($x$) der Regelstrecke (1) zu erreichen, **dadurch gekennzeichnet, dass** die Inverse des Modells der Regelstrecke (1) aus einem nichtlinearen dynamischen Teil und einem nichtlinearen statischen Teil besteht, **dass** ein statisches Kennfeld (20) der Regelstrecke (1) bereitgestellt ist, die die Stellgröße ($u$) und die Zustandsgröße ($x$) auf die Ausgangsgröße ($y$) abbildet, und der nichtlineare statische Teil als invertiertes Kennfeld (21) dieses statischen Kennfeldes (20) ausgebildet ist, wobei das invertierte Kennfeld (21) die Stellgröße ($u$) für eine gegebene Zustandsgröße ($x$) und Ausgangsgröße ($y$) ausgibt, **dass** ein gewünschtes Regelkreisverhalten der Regelstrecke (1) mit einer gewünschten Ausgangsgröße ($y_{gew}$) gewählt wird und der nichtlineare dynamische Teil als Funktion der Systemparameter ($K$, $\tau$) des Modells und der gewünschten Ausgangsgröße ($y_{gew}$) des gewünschten Regelkreisverhaltens der Regelstrecke (1) ausgebildet ist, **und dass** der dynamische Ausgang ($y_{dyn}$) des nichtlinearen dynamischen Teils und die Zustandsgröße ($x$) in das invertierte Kennfeld (21) des nichtlinearen statischen Teils eingespeist werden, die die Ausgabe ($u_{FF}$) der Vorsteuerung (3) ausgibt.

2. Verfahren nach Anspruch 1, **dadurch gekennzeichnet, dass** die Regelstrecke (1) als Regelstrecke erster Ordnung mit einer Verstärkung ($K$) und einer Zeitkonstante ($\tau$) als Systemparameter modelliert ist.

3. Verfahren nach Anspruch 1, **dadurch gekennzeichnet, dass** der Sollwert ($y_{soll}$) der Ausgangsgröße ($y$) oder der gewünschten Ausgangsgröße ($y_{soll}$) durch eine Systemzeitverzögerung ($D$) verzögert ist, bevor er in den Rückführregler (4) eingespeist wird.

4. Verfahren nach Anspruch 1, **dadurch gekennzeichnet, dass** vor einem Invertieren des statischen Kennfeldes (20) ein Monotonisierungsschritt zum Monotonisieren des statischen Kennfeldes (20) der Regelstrecke (1) durchgeführt wird, falls das statische Kennfeld (20) nicht monoton steigt.

**Revendications**

1. Procédé de commande d'un système technique en tant qu'installation (1) avec un dispositif de commande à deux degrés de liberté (2) comportant un dispositif de commande prédictive (3) fournissant une sortie ($u_{FF}$) et un dispositif de commande de rétroaction (4) fournissant une sortie ($u_{FB}$) tandis que l'installation (1) est modélisée avec un modèle avec une structure de modèle choisie ayant des paramètres de système ($K$, ??) et le dispositif de commande prédictive (3) utilise un modèle de l'installation (1) inverse et le dispositif de commande à deux degrés de liberté (2) est conçu pour calculer une variable de commande ($u$) de l'installation (1) à partir de la sortie ($u_{FF}$) du dispositif de commande prédictive (3) et la sortie ($u_{FB}$) du dispositif de commande de rétroaction (4) pour atteindre une valeur de consigne ($y_{set}$) d'une variable de sortie ($y$) de l'installation (1) à partir d'une variable d'état ($x$) de l'installation (1), **caractérisé en ce que** le modèle de l'installation (1) inverse est constitué d'une partie dynamique non linéaire et d'une partie statique non linéaire, **en ce qu'**une carte statique (20) de l'installation (1) est fournie qui mappe la variable de commande ($u$) et la variable d'état ($x$) sur la variable de sortie ($y$) et la partie statique non linéaire est formée comme une carte inversée (21) de cette carte statique (20), tandis que la carte inversée (21) délivre la variable de commande (u) pour une variable d'état donnée (x) et une variable de sortie (y), **en ce qu'**un comportement en boucle fermée souhaité de l'installation (1) avec une variable de sortie souhaitée ($y_{des}$) est choisi et la partie dynamique non linéaire est formée en fonction des paramètres du système (K, ??) du modèle et de la variable de sortie souhaitée ($y_{des}$) du comportement en boucle fermée souhaité de l'installation (1) et que la sortie dynamique ($y_{dyn}$) de la partie dynamique non linéaire et la variable d'état (x) sont introduites dans la carte inversée (21) de la partie statique non linéaire qui délivre la sortie ($u_{FF}$) du dispositif de commande prédictive (3).

2. Procédé selon la revendication 1, **caractérisé en ce que** l'installation (1) est modélisée comme une installation de premier ordre avec un gain (K) et une constante de temps (??) comme paramètres de système.

3. Procédé selon la revendication 1, **caractérisé en ce que** la valeur de consigne ($y_{set}$) de la variable de sortie (y) ou la variable de sortie souhaitée ($y_{des}$) est retardée d'une temporisation système (D) avant d'être introduite dans le dispositif de rétroaction (4).

4. Procédé selon la revendication 1, **caractérisé en ce qu'**une étape de monotonisation pour monotoniser la carte statique (20) de la plante (1) est réalisée avant d'inverser la carte statique (20) si la carte statique (20) ne croît pas de manière croissante.

Fig. 1

Fig. 2

Fig. 3

Fig. 4

Fig. 5

Fig. 6

Fig. 7

Fig. 8

Fig. 9

## Fig. 10

## Fig. 11

Fig. 12

Fig. 13

Fig. 14

Fig. 15

Fig. 16

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BINGZHAO GAO et al.** Position Control of Electric Clutch Actuator Using a Triple-Step Nonlinear Method. *IEEE Transactions on Industrial Electronics,* December 2014, vol. 61 (12
- **GREGORCIC, G. et al.** Nonlinear system identification: From multiple-model networks to Gaussian processes. *Engineering Applications of Artificial Intelligence,* 2008, vol. 21, 1035-1055
- **HAMETNER, C. et al.** Local model network identification for online engine modelling. *Information Sciences,* 2013, vol. 220 (0), 210-225
- **GREGORCIC, G. et al.** Gaussian process approach for modelling of nonlinear systems. *Engineering Applications of Artificial Intelligence,* 2009, vol. 22, 522-533